# FASCICULE DE BREVET EUROPEEN

(11) **EP 1 554 923 B1**
(45) Date de publication et mention de la délivrance du brevet: **14.11.2007**
(21) Numéro de dépôt: 04005413.2
(22) Date de dépôt: 08.03.2004
(51) Int. Cl.: A01G 9/12, A01G 9/02

(54) **Tuteur pour plantes, notamment adaptable sur recipient horticole polygonal**
Pflanzenstütze, insbesondere zur Anbringung an mehreckigen Pflanzbehältern
Support for plants, especially adaptable on polygonal plant pots

(30) Priorité: 16.01.2004 FR 0400413
(43) Date de publication de la demande: 20.07.2005
(73) Titulaire: Artois Qualite Plastique, 62470 Calonne Ricouart (FR)
(72) Inventeur: Leroy, Bruno, 62470 Camblain Chatelain (FR)
(74) Mandataire: Matkowska, Franck

(56) Documents cités:
- FR-A- 2 667 573
- FR-A- 2 807 288
- US-B1- 6 393 764

## Description

### DOMAINE TECHNIQUE

La présente invention concerne le tuteurage de plantes fixées en terre dans des récipients horticoles. Elle a pour principal objet un nouveau tuteur adaptable sur récipients horticoles de forme polygonale, et de préférence sur récipients horticoles de forme rectangulaire.

### ART ANTERIEUR

On désigne dans le présent texte par le terme « plante », tout végétal qui est fixé en terre ou équivalent et dont la partie supérieure s'épanouit dans l'air.

De nombreuses plantes sont à ce jour cultivées en étant mises en terre dans des récipients horticoles, en vue notamment de faciliter leur manipulation et transport, ainsi que leur présentation à la vente dans les jardineries, serres horticoles, grandes et moyennes surfaces....

On désigne dans le présent texte par « récipient horticole », tout récipient type pot, barquette,... qui est ouvert en partie supérieure, et qui est destiné d'une manière générale à recevoir une ou plusieurs plantes.

Le récipient horticole peut être destiné à contenir directement la terre dans laquelle sont plantées la ou les plantes ; dans ce cas, les parois latérales du récipient et la paroi de fond du récipient sont généralement pleines, à l'exception éventuellement d'un trou pour l'écoulement du surplus d'eau qui peut être ménagé dans la paroi de fond du récipient ; un exemple de ce type de récipient horticole est illustré par exemple sur la figure 1 de la demande de brevet français FR 2 807 288.

Le récipient horticole peut également être utilisé pour recevoir des plantes fixées en terre ou équivalent dans des pots ou godets de plus petite taille, ledit récipient servant dans ce cas principalement au transport ; dans ce cas, les parois latérales et/ou la paroi de fond du récipient horticole peuvent être ajourées, tel que par exemple dans la variante de récipient horticole illustrée sur la figure 1 de la demande de brevet français FR 2 667 573.

Pour maintenir verticalement au cours de leur pousse certaines plantes qui ont notamment tendance naturellement à s'affaisser, il est usuel d'adapter sur le récipient horticole un tuteur généralement en matière plastique. Selon le cas, le tuteur peut être directement planté dans la terre ou équivalent dans laquelle est fixée la plante, ou être monté, généralement de manière amovible, sur le récipient horticole.

Parmi les différents types connus de récipients horticoles, on trouve principalement des récipients qui sont de type circulaire ou des récipients qui sont de type polygonal, c'est-à-dire dont le bord supérieur définit une ouverture principale polygonale. Le plus souvent les récipients de forme polygonale présentent plus particulièrement une ouverture quadrangulaire formant généralement un rectangle ou un carré.

La demande de brevet français FR 2 807 288 divulgue un tuteur de forme parallélépipédique adaptable sur récipient horticole rectangulaire. Ce tuteur comporte quatre parois faisant office chacune de grille de tuteurage. Ce tuteur vient se fixer de manière amovible sur une collerette en saillie au niveau du bord supérieur du récipient. Ce tuteur permet un tuteurage efficace, mais présente l'inconvénient majeur d'être très encombrant. Egalement, la fixation de ce tuteur sur le récipient est malaisée, car elle oblige à faire enfiler le tuteur sur le récipient en le faisant passer par le fond du récipient, ce qui nécessite de soulever le récipient.

La demande de brevet français FR 2 667 573 divulgue un tuteur (voir notamment figure 1) qui est adaptable sur récipient horticole rectangulaire, et qui est composé de plusieurs éléments : un cadre rectangulaire et une pluralité de montants, les montants étant prévus pour être emboîtés verticalement dans des ouvertures ménagées dans le bord supérieur du récipient, et le cadre rectangulaire étant prévu pour être fixé de manière amovible sur les extrémités supérieures des montants verticaux. Ce tuteur est avantageux car il peut être stocké avec un encombrement réduit en étant démonté. Cependant, il présente plusieurs inconvénients.

Un premier inconvénient majeur de ce type de tuteur est qu'il ne permet pas un tuteurage efficace contrairement par exemple au tuteur précité de la demande de brevet français FR 2 807 288. En effet, le seul élément de tuteurage des plantes est constitué par le cadre rectangulaire, ce qui est généralement insuffisant. En effet, les plantes dont la taille est plus faible que la hauteur des montants supportant le cadre rectangulaire ne sont pas retenues par le cadre, et peuvent ainsi fléchir librement en dehors du cadre. Il est certes prévu, dans une variante perfectionnée décrite notamment en référence à la figure 7 de la demande de brevet français FR 2 667 573, d'améliorer le tuteur en sorte que le cadre rectangulaire soit réglable en hauteur par rapport aux montants verticaux ; cependant cette réalisation complique la structure des montants, et complique également la mise en oeuvre du tuteur, puisqu'on est obligé pour un tuteurage efficace d'ajuster dans le temps la position du cadre en fonction de la pousse des plantes. De surcroît, lorsque les plantes n'ont pas toutes la même hauteur (ce qui est fréquemment le cas), le tuteurage reste inefficace pour les plantes situées en dessous du cadre support.

Le tuteur décrit dans la demande de brevet français FR 2 667 573 présentent également les autres inconvénients suivants : il oblige à gérer des stocks de pièces différentes (les cadres d'une part, et les montants d'autre part), ce qui complique la gestion de stock. Pour l'assemblage du tuteur, les montants doivent être stables verticalement et surtout doivent toujours avoir la même position pour que le cadre rectangulaire puisse s'adapter sur les montants ; ces contraintes d'utilisation rendent ainsi ce type de tuteur totalement inadapté pour être planté directement dans la terre, et obligent en pratique à utiliser ce tuteur avec un type donné de récipient qui doit nécessairement présenter des ouvertures en vis-à-vis du cadre du tuteur lorsque le tuteur est monté sur le récipient.

### OBJECTIF DE L'INVENTION

La présente invention vise à proposer un nouveau tuteur, qui est adaptable sur des récipient horticole polygonal, et qui pallie les inconvénients susmentionnés des tuteurs de l'art antérieur.

### RESUME DE L'INVENTION

L'objectif ci-dessus est atteint par le tuteur pour plantes de l'invention qui est caractérisé en ce qu'il comporte un cadre polygonal et des éléments de tuteurage qui s'étendent à partir d'au moins deux cotés dudit cadre ; chaque élément de tuteurage comporte au moins deux montants reliés par au moins un support de tuteurage transversal, et est articulé par rapport au cadre en sorte de pouvoir être amené dans au moins deux positions : une première position dans laquelle l'élément de tuteurage est sensiblement dans le même plan que le cadre ; une deuxième position dans laquelle l'élément de tuteurage s'étend sensiblement à angle droit par rapport au cadre.

Plus particulièrement, mais non nécessairement, le tuteur de l'invention comporte avantageusement l'une et/ou l'autre des caractéristiques suivantes, prises isolément ou en combinaison :
- au moins deux éléments de tuteurage articulés s'étendent à partir de deux côtés opposés du cadre ;
- au moins deux éléments de tuteurage articulés s'étendent à partir des deux côtés de plus grande longueur du cadre ;
- le tuteur comporte des moyens permettant une fixation amovible du tuteur sur un récipient horticole ;
- le cadre du tuteur est quadrangulaire, et de préférence forme un rectangle ou un carré ;
- le tuteur comporte au moins un élément de tuteurage articulé sur chaque côté du cadre ;
- au moins un élément de tuteurage articulé s'étend sensiblement sur toute la longueur du côté correspondant du cadre ;
- le tuteur est de préférence en matière plastique.

L'invention a pour autre objet un récipient horticole et un tuteur de l'invention, le tuteur et le récipient horticole étant en outre conçus de telle sorte que le tuteur peut être monté de manière amovible sur le récipient horticole, lorsque les éléments de tuteurage sont dans la deuxième position précitée.

### BREVES DESCRIPTION DES FIGURES

D'autres caractéristiques et avantages de l'invention apparaîtront plus clairement à la lecture de la description détaillée ci-après, donnée à titre d'exemple non limitatif et non exhaustif de l'invention, et en référence aux dessins annexés sur lesquels :
- la figure 1 représente un tuteur réalisé conformément à une variante préférée de l'invention, et
- la figure 2 est une représentation en perspective du tuteur de la figure 1 monté sur un pot rectangulaire,
- la figure 3 est une vue de détail de l'encliquetage d'un montant du tuteur sur le rebord du pot,
- la figure 4 illustre une autre variante de réalisation d'un tuteur de l'invention.

### DESCRIPTION DETAILLEE

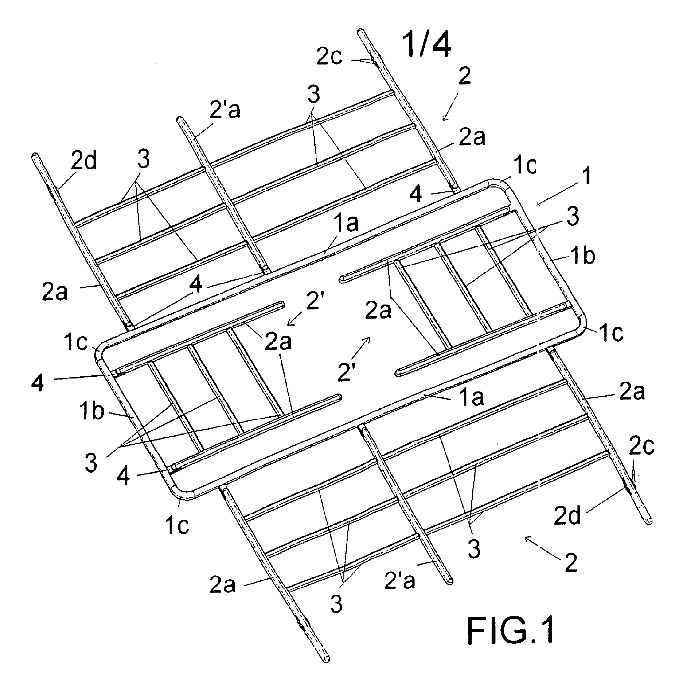

Le tuteur de la figure 1 comporte un cadre rectangulaire 1, et quatre éléments de tuteurage 2, 2' qui sont positionnés sensiblement dans le même plan que le cadre 1. Ce tuteur est par exemple une pièce en plastique monobloc réalisée en série par injection moulage.

Le cadre rectangulaire 1 comporte :
- deux éléments rectilignes 1a, de grande longueur, sensiblement parallèles, et formant les deux grands côtés opposés du cadre,
- deux éléments rectilignes 1b, de plus faible longueur, sensiblement parallèles, et formant les deux petit côtés opposés du cadre, et
- quatre coins arrondis 1 c.

Les deux éléments de tuteurage 2 s'étendent à partir respectivement des deux éléments rectilignes 1a de plus grande longueur du cadre, et vers l'extérieur du cadre 1 ; chaque élément de tuteurage 2 est articulé par rapport au cadre 1. Les deux éléments de tuteurage 2' s'étendent à partir respectivement des deux éléments rectilignes 1 b de plus faible longueur du cadre, et vers l'intérieur du cadre 1 ; chaque élément de tuteurage 2' est en articulé par rapport au cadre 1.

Chaque élément de tuteurage 2, 2' comporte deux montants rectilignes principaux 2a qui sont parallèles, et qui s'étendent sensiblement à angle droit par rapport au côté correspondant du cadre 1. Dans l'exemple particulier illustré, les éléments de tuteurage 2a de plus grande longueur comportent également un montant intermédiaire 2'a parallèle aux montants principaux 2a et positionné entre les deux montants principaux 2a. Les montants principaux 2a (et également le montant intermédiaire 2'a pour les éléments de tuteurage 2) sont reliés entre eux par des supports de tuteurage rectilignes 3, qui d'une manière générale s'étendent transversalement aux montants 2a, 2'a, et qui dans l'exemple particulier illustré sur la figure 1 s'étendent sensiblement à angle droit par rapport aux montants 2a, 2'a.

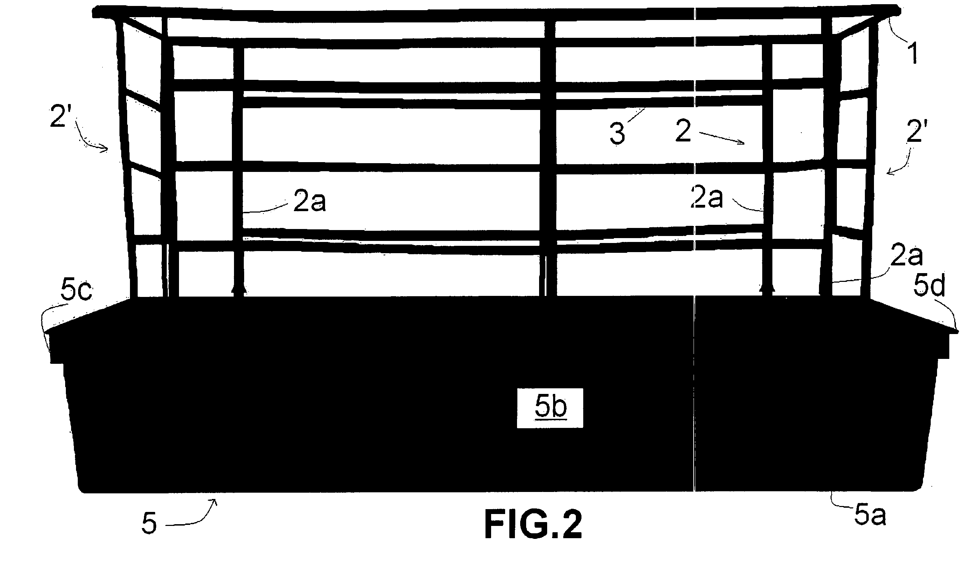

L'articulation des éléments de tuteurage 2, 2' par rapport au cadre 1 est réalisée au moyen de liaisons plates 4 de plus faible épaisseur (par rapport à l'épaisseur du cadre 1 et des montants 2a, 2'a) qui relient chaque montant 2a, 2'a à l'élément 1a, 1b correspondant du cadre. Ces liaisons 4 de faible épaisseur permettent d'amener, par pliage, les éléments de tuteurage 2,2' depuis leur première position de la figure 1 jusque dans la deuxième position fonctionnelle de la figure 1 (et vice et versa). Dans la première position de la figure 1, le tuteur peut avantageusement être stocké ou transporté avec un encombrement réduit. Dans la position fonctionnelle de la figure 2, les éléments de tuteurage 2, 2' ne sont plus sensiblement coplanaires avec le cadre 1, mais s'étendent sensiblement à angle droit par rapport au plan du cadre 1.

Plus particulièrement, dans l'exemple préféré de réalisation de la figure 1, les montants principaux 2a des éléments tuteurage 2 comportent au niveau de leur extrémité inférieure (extrémité opposée au cadre) deux paires d'ergots 2c, chaque paire d'ergots délimitant une encoche 2d pour le montage du tuteur sur un pot ou équivalent.

On a représenté sur la figure 2, le tuteur de la figure 1 monté sur un pot rectangulaire 5. Le pot 5 comporte de manière usuelle une paroi de fond 5a, quatre parois latérales 5b, et un rebord supérieur 5c pourvu d'une collerette périphérique 5d de faible épaisseur.

Dans la collerette 5d sont ménagés quatre trous traversant 6 pour la fixation du tuteur sur le pot.

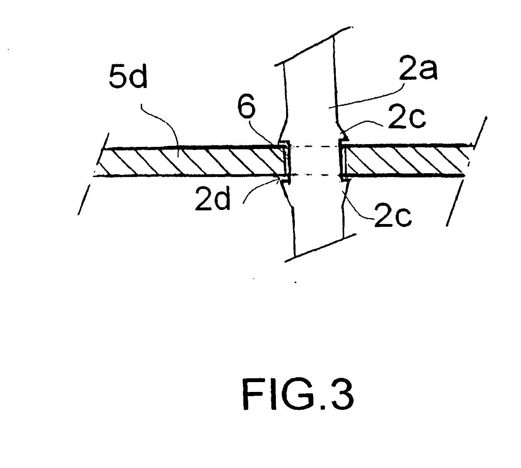

Pour monter de manière amovible le tuteur de la figure 1 sur le pot 5 de la figure 2, on replie à angle droit les éléments de tuteurage 2 par rapport au cadre 1, et on enfile l'extrémité inférieure (extrémité à l'opposé du cadre 1) des montants 2a de chaque élément de tuteurage 2 dans les trous 6, jusqu'à encliquetage des ergots 2c (voir figure 3). Le tuteur est ainsi solidaire du pot 5, et peut au besoin être retiré du pot. La base du montant intermédiaire 2'a des éléments de tuteurage 2 est positionnée à l'intérieure du pot 5. Ensuite, on replie les éléments de tuteurage 2' à angle droit par rapport au cadre 1, en sorte de positionner la base de ses éléments 2' à l'intérieur du pot 5, tel que cela est illustré sur la figure 2. Les montants 2a des éléments de tuteurage 2' seront avantageusement plantés dans la terre (non représentée) contenue dans le pot 5 pour la fixation des plantes.

Le tuteur ainsi monté sur le pot 5 (figure 2) forme un parallélépipède rectangle, dont les supports de tuteurage transversaux 3 et le cadre 1 permettent avantageusement un maintien efficace des plantes qui seront plantées dans le pot 5, et ce pour différentes hauteurs de plantes.

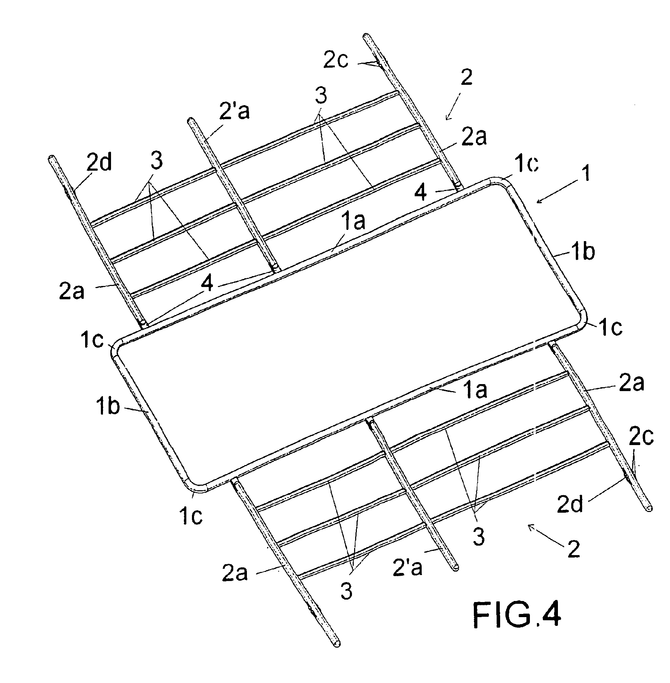

L'invention n'est pas limitée à l'exemple particulier et préféré de réalisation des figures 1 à 3. En particulier, et de manière non exhaustive, le tuteur de l'invention pourrait comporter seulement deux éléments de tuteurage qui s'étendent à partir de deux cotés du cadre 1, tel que cela est illustré sur la variante de la figure 4 ; de préférence, mais non nécessairement, il s'agit de deux côtés opposés.

Les éléments de tuteurage 2' pourraient dans une autre réalisation s'étendre vers l'extérieur du cadre 1, de manière comparable aux éléments de tuteurage 2 de la figure 1.

Dans une autre variante de réalisation, le tuteur pourrait comporter plusieurs éléments de tuteurage adjacents et s'étendant à partir du même côté du cadre, au lieu d'un unique élément de tuteurage 2 ou 2' pour chaque côté du cadre tel que dans l'exemple préféré de réalisation de la figure 1.

Les ergots 2c pourraient être remplacés par tout moyen équivalent remplissant la même fonction, c'est-à-dire permettant un montage amovible du tuteur sur le pot. Dans un version simplifiée, le tuteur de l'invention pourrait ne pas comporter d'ergots 2c ou équivalent ; dans ce cas, le tuteur ne se monte pas sur le pot, mais est prévu uniquement pour être planté dans la terre contenue dans le pot.

Les supports de tuteurage transversaux 3 ne sont pas nécessairement parallèles entre eux, et ne forment pas nécessairement un angle droit avec les montant 2a, 2'a ; ces supports de tuteurage 3 peuvent par exemple former des croisillons ou équivalent.

Bien entendu, l'invention n'est pas limitée à un tuteur comportant un cadre 1 de forme rectangulaire, mais s'étend d'une manière générale à tout tuteur présentant un cadre 1 polygonal.

## Revendications

1. Tuteur pour plantes **caractérisé en ce qu**'il comporte un cadre polygonal (1) et des éléments de tuteurage (2 ou 2') qui s'étendent à partir d'au moins deux cotés dudit cadre, et en ce que chaque élément de tuteurage (2 ou 2') comporte au moins deux montants (2a) reliés par au moins un support de tuteurage transversal (3), et est articulé par rapport au cadre (1) en sorte de pouvoir être amené dans au moins deux positions : une première position dans laquelle l'élément de tuteurage (2 ou 2') est sensiblement dans le même plan que le cadre (1) ; une deuxième position dans laquelle l'élément de tuteurage (2 ou 2') s'étend sensiblement à angle droit par rapport au cadre.

2. Tuteur selon la revendication 1 **caractérisé en ce qu**'au moins deux éléments de tuteurage (2 ou 2') articulés s'étendent à partir de deux côtés opposés du cadre (1).

3. Tuteur selon la revendication 1 ou 2 **caractérisé en ce qu**'au moins deux éléments de tuteurage (2) articulés s'étendent à partir des deux côtés de plus grande longueur du cadre (1).

4. Tuteur selon l'une des revendications 1 à 3 **caractérisé en ce qu'**il comporte des moyens (2c) permettant une fixation amovible du tuteur sur un récipient horticole.

5. Tuteur selon l'une des revendications 1 à 4 **caractérisé en ce que** le cadre (1) est quadrangulaire, et de préférence forme un rectangle ou un carré.

6. Tuteur selon l'une des revendications 1 à 5 **caractérisé en ce qu**'il comporte au moins un élément de tuteurage (2 ou 2') articulé sur chaque côté du cadre.

7. Tuteur selon l'une des revendications 1 à 6 **caractérisé en ce qu'**au moins un élément de tuteurage (2 ou 2') s'étend sensiblement sur toute la longueur du côté correspondant du cadre (1).

8. Tuteur selon l'une des revendications 1 à 7 **caractérisé en ce qu**'il est en matière plastique.

9. Récipient horticole et tuteur **caractérisés en ce que** le tuteur est conforme à l'une des revendications 1 à 8, et **en ce que** le tuteur et le récipient horticole (5) sont conçus de telle sorte que le tuteur peut être monté de manière amovible sur le récipient horticole, lorsque les éléments de tuteurage (2) sont dans la deuxième position.

## Claims

1. Support stake for plants **characterised in that** it includes a polygonal frame (1) and staking elements (2 or 2'), which extend from at least two sides of the said frame, and **in that** each staking element (2 or 2') includes at least two uprights (2a) linked by at least one transverse staking support (3) and is articulated with the frame (1) so as to be able to be moved into at least two positions: a first position in which the staking element (2 or 2') is substantially in the same plane as the frame (1); a second position in which the staking element (2 or 2') extends substantially at a right angle to the frame.

2. Support stake according to claim 1, **characterised in that** at least two articulated staking elements (2 or 2') extend from two opposite sides of the frame (1).

3. Support stake according to claim 1 or 2, **characterised in that** at least two articulated staking elements (2) extend from the two longest sides of the frame (1).

4. Support stake according to one of claims 1 to 3, **characterised in that** it includes means (2c) enabling the support stake to be removably fastened to a horticultural container.

5. Support stake according to one of claims 1 to 4, **characterised in that** the frame (1) is quadrangular and preferably forms a rectangle or a square.

6. Support stake according to one of claims 1 to 5, **characterised in that** it includes at least one staking element (2 or 2') articulated with each side of the frame.

7. Support stake according to one of claims 1 to 6, **characterised in that** at least one staking element (2 or 2') extends substantially along the entire length of the corresponding side of the frame (1).

8. Support stake according to one of claims 1 to 7, **characterised in that** it is made of a plastic material.

9. Horticultural container and support stake **characterised in that** the support stake corresponds to one of claims 1 to 8 and **in that** the support stake and the horticultural container (5) are designed so that the support stake can be mounted in a removable manner on the horticultural container, when the staking elements (2) are in the second position.

## Patentansprüche

1. Pflanzenstütze, **dadurch gekennzeichnet, dass** sie einen mehreckigen Rahmen (1) und Stützelemente (2 bzw. 2') aufweist, die sich von zumindest zwei Seiten des Rahmens ausgehend erstrecken, und dass jedes Stützelement (2 bzw. 2') zumindest zwei Holme (2a) aufweist, die über zumindest eine Stützquerstrebe (3) verbunden sind, und bezüglich des Rahmens (1) so angelenkt ist, dass es in zumindest zwei Stellungen gebracht werden kann, nämlich in eine erste Stellung, in welcher das Stützelement (2 bzw. 2') im wesentlichen in der gleichen Ebene wie der Rahmen (1) liegt, und in eine zweite Stellung, in welcher das Stützelement (2 bzw. 2') im wesentlichen rechtwinklig zum Rahmen verläuft.

2. Pflanzenstütze nach Anspruch 1, **dadurch gekennzeichnet, dass** zumindest zwei angelenkte Stützelemente (2 bzw. 2') sich von zwei entgegengesetzten Seiten des Rahmens (1) ausgehend erstrecken.

3. Pflanzenstütze nach Anspruch 1 oder 2, **dadurch gekennzeichnet, dass** zumindest zwei angelenkte Stützelemente (2) sich von den beiden längeren Seiten des Rahmens (1) ausgehend erstrecken.

4. Pflanzenstütze nach einem der Ansprüche 1 bis 3, **dadurch gekennzeichnet, dass** sie Mittel (2c) aufweist, die eine abnehmbare Befestigung der Stütze an einen Pflanzbehälter ermöglichen.

5. Pflanzenstütze nach einem der Ansprüche 1 bis 4, **dadurch gekennzeichnet, dass** der Rahmen (1) viereckig ist und vorzugsweise ein Rechteck bzw. ein Quadrat bildet.

6. Pflanzenstütze nach einem der Ansprüche 1 bis 5, **dadurch gekennzeichnet, dass** sie zumindest ein an jeder Seite des Rahmens angelenktes Stützelement (2 bzw. 2') aufweist.

7. Pflanzenstütze nach einem der Ansprüche 1 bis 6, **dadurch gekennzeichnet, dass** zumindest ein Stützelement (2 bzw. 2') sich im wesentlichen über die gesamte Länge der entsprechenden Seite des Rahmens (1) erstreckt.

8. Pflanzenstütze nach einem der Ansprüche 1 bis 7, **dadurch gekennzeichnet, dass** sie aus Kunststoff besteht.

9. Pflanzbehälter und Stütze, **dadurch gekennzeichnet, dass** die Stütze einem der Ansprüche 1 bis 8 entspricht und dass die Stütze und der Pflanzbehälter (5) so ausgelegt sind, dass die Stütze abnehmbar am Pflanzbehälter angebracht werden kann, wenn die Stützelemente (2) sich in der zweiten Stellung befinden.
